# EUROPÄISCHE PATENTSCHRIFT

(11) **EP 1 154 146 B1**
(45) Veröffentlichungstag und Bekanntmachung des Hinweises auf die Patenterteilung: **26.12.2007**
(21) Anmeldenummer: 01110280.3
(22) Anmeldetag: 26.04.2001
(51) Int. Cl.: F02M 31/10

(54) **Heizeinrichtung für insbesondere gasförmige Kraftstoffe**
Heating device in particular for gaseous fuels
Dispositif de chauffage, en particulier pour des carburants gazeux

(30) Priorität: 11.05.2000 US 569206
(43) Veröffentlichungstag der Anmeldung: 14.11.2001
(73) Patentinhaber: DEERE & COMPANY, Moline, Illinois 61265-8098 (US)
(72) Erfinder: Hartman, William Lyle, Waterloo, IA 50702 (US); Latusek, John Philip, Cedar Falls, IA 50613 (US); Schindler, Rodney Allen, Hudson, IA 50643 (US)
(74) Vertreter: Magin, Ludwig Bernhard

(56) Entgegenhaltungen:
- US-A- 4 395 995
- US-A- 4 648 372
- US-A- 4 748 960
- US-A- 4 846 137
- US-A- 6 044 825

## Beschreibung

Die Erfindung betrifft eine Heizeinrichtung für insbesondere gasförmige Kraftstoffe mit wenigstens einem Kraftstoffeinlaß und einem Kraftstoffauslaß sowie wenigstens einem Kühlmitteleinlaß und einem Kühlmittelauslaß, welche durch einen Kühlmitteldurchlaß verbunden sind, mit einem Innenteil, der einen Kraftstoffdurchlaß bestimmt und diesen von dem Kühlmitteldurchlaß trennt, und durch ein Steuermittel, das in Abhängigkeit von der Temperatur des Kraftstoffs einen Kühlmittelstrom durch den Kühlmitteldurchlaß zuläßt bzw. unterbindet.

Komprimiertes natürliches Gas wird, wenn es als Kraftstoff für Fahrzeuge verwendet wird, unter sehr hohen Drücken, üblicherweise größer als 3000 psi, gelagert. Fahrzeugantriebe können den Kraftstoff unter solch hohem Druck nicht verwenden. Daher wird ein Druckregler benötigt, um den Druck des Kraftstoffs zu reduzieren. Ein Ein-Stufen-Regler ist zur Vereinfachung des Aufbaus wünschenswerter als die Verwendung eines Mehr-Stufen-Reglers. Während der Druckreduzierung dehnt sich das Gas aus und die Temperatur des Gases sinkt. Durch die Ausdehnung kann das Gas Temperaturen um oder unter -100°C erreichen. Dieser Abkühlungseffekt des Gases wird bei dem bevorzugten Ein-Stufen-Regler am deutlichsten. Ein-Stufen-Regler, wie sie von ITT Conoflow erhältlich sind, sind beispielsweise derart ausgebildet, daß sich das Gas außerhalb des Gehäuses des Druckreglers ausdehnt, so daß der Druckregler selbst nicht der extremen Kälte des sich ausdehnenden Gases ausgesetzt ist.

Das Kraftstoff-Dosierventil des Antriebs muß jedoch eine Kraftstofftemperatur von über -40 °C und vorzugsweise über 0°C aufweisen, um ein Gefrieren von Feuchtigkeit in der Kraftstoffleitung zu vermeiden. Wenn der Druckregler in großer Nähe zu dem Antrieb eingesetzt wird, tritt keine ausreichende Erwärmung des Kraftstoffs in der Kraftstoffleitung, die den Druckregler mit dem Dosierventil des Antriebs verbindet, durch die Umgebung auf. Um den Kraftstoff auf die gewünschte Temperatur zu bringen, ist eine Heizeinrichtung erforderlich, die die Temperatur des sich ausdehnenden Kraftstoffs bzw. des Gases über eine minimale von dem Dosierventil benötigte Temperatur erhöht.

Die US-A-5,483,943 zeigt eine solche Heizeinrichtung, die einen Druckregler wenigstens teilweise umgibt. Die Heizeinrichtung weist einen Temperatursensor auf, welcher die Temperatur eines Kühlmittels in der Heizeinrichtung aufnimmt und in Abhängigkeit von der Kühlmitteltemperatur, den Kühlmitteldurchfluß durch die Heizeinrichtung steuert, so daß die Menge an auf den Kraftstoff einwirkendem Kühlmittel und somit die Erwärmung des Kraftstoffs gesteuert wird.

Die US-A-4,395,995 zeigt ein Kraftstoffheizsystem für einen Verbrennungsmotor sowohl für Gas- als auch für Dieselkraftstoffe. Das Kraftstoffheizsystem weist mehrere Wärmetauscher auf, wobei ein Ventil vorgesehen ist, welches mit einem Temperatursensor zusammenwirkt, um den Durchfluss von heißem Wasser durch die Wärmetauscher zu steuern.

Die US-A-6,044,825 beschreibt einen Kraftstoffvergaser zur Verwendungen mit Kraftstoffen wie Propan. Der Vergaser weist eine Mehrzahl interner Wandungen und Hohlräume auf, welche einen Wärmeaustausch und einen Wärmetransfer von einem flüssigen Motorkühlmittel zu dem Kraftstoff unterstützen.

Die US-A-4,648,372 offenbart eine Vorheizeinrichtung für einen Verbrennungsmotor. Die Vorheizeinrichtung weist ein längliches Gehäuse auf, welches in einen Einlassraum, einen zentralen Wärmetauscherraum und einen Auslassraum aufgeteilt ist. In dem Auslassraum ist ein normalerweise geöffnetes, thermisch gesteuertes Ventil angeordnet, welches schließt, wenn die Kühlmitteltemperatur einen vorbestimmten Wert erreicht, um den Kraftstoff auf einer gewünschten Maximaltemperatur zu halten. Das System weist einen Wärmetauscher mit einem zylindrischen, hohlen Gehäuse auf, das auf beide Seiten durch Kappen verschlossen wird. Ein zentraler Raum wird durch ein Paar beabstandeter, schräg verlaufender Schotten bestimmt.

Das der Erfindung zugrundeliegende Problem wird darin gesehen, daß bekannte Heizeinrichtungen nicht optimal arbeiten.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird eine Heizeinrichtung, insbesondere für gasförmige Kraftstoffe, zur Verfügung gestellt, die thermostatisch gesteuert wird. Das Gehäuse der Heizeinrichtung kann mit dem Gehäuse eines Druckreglers verbunden werden. Die Heizeinrichtung wirkt mit einem Kühlsystem eines Antriebs zusammen und empfängt von diesem Kühlmittel, das durch einen Kühlmitteldurchlaß der Heizeinrichtung fließt. Der Kraftstoffdurchlaß weist einen Kraftstoffeinlaß und einen Kraftstoffauslaß auf. Der Kraftstoffeinlaß kann mit dem Kraftstoffauslaß des Druckreglers über eine äußere Leitung in Verbindung stehen.

Das Gehäuse der Heizeinrichtung ist zylindrisch ausgebildet und weist einen Innenteil auf, der die Kraftstoffpassage und die Kühlmittelpassage voneinander trennt.

Der Innenteil kann eine zylindrische Wandung mit sich radial nach außen in die Kraftstoffpassage erstreckenden Finnen und sich radial nach innen in die Kühlmittelpassage erstreckenden Finnen aufweisen. Die sich nach außen erstreckenden Finnen sind vorzugsweise an abwechselnden axialen Endbereichen ausgeschnitten ausgebildet und bilden so einen serpentinenförmigen Kraftstoffdurchlaß. Das zylindrische Gehäuse weist einen Kraftstoffeinlaß und einen Kraftstoffauslaß auf, welche umfangsmäßig voneinander beabstandet sind. Ein Paar von Finnen kann den Kraftstoffeinlaß von dem Kraftstoffauslaß trennen, wodurch ein isolierender Luftraum zwischen dem Kraftstoffeinlaß und dem Kraftstoffauslaß entsteht.

Kühlmittel fließt durch das Zentrum des Innenteils, um Wärme an den Innenteil und die sich radial nach außen in den Kraftstoffdurchgang erstreckenden Finnen zu liefern. Es ist ein Steuermittel bzw. ein Thermostat vorgesehen, der den Kühlmitteldurchlaß schließt, wenn der Kraftstoff überhitzt ist. Das Steuermittel kann durch ein Wachsreservoir gesteuert bzw. gebildet werden, das in dem Kraftstoffdurchlaß angrenzend an den Kraftstoffauslaß angeordnet ist. Der Thermostat reagiert somit zum Öffnen und Schließen des Kühlmitteldurchlasses auf die Temperatur des Kraftstoffs.

Ist die Heizeinrichtung äußerlich an das Gehäuse des Druckreglers angeschlossen, anstatt in diesen innerlich eingeformt zu sein, kann sie in einfacher Weise weggelassen bzw. entfernt werden, wenn der Druckregler bei einer Fahrzeugkonfiguration eingesetzt wird, bei der eine ausreichende Erwärmung des Kraftstoffs zwischen dem Druckregler und dem Antrieb selbsttätig auftritt, so daß die Kraftstoffleitung zum Antrieb mit dem Kraftstoffausgang des Druckreglers verbunden ist.

In einer bevorzugten Ausführungsform wird der Druck des Kraftstoffs auf 110 psi oder 120 psi geregelt und der Kraftstoff auf ungefähr 32,2°C (90°F) erwärmt. Die Heizeinrichtung der vorliegenden Erfindung kann mit anderen gasförmigen Kraftstoffen neben Erdgas verwendet werden, die unter hohen Drücken gespeichert werden und sich extrem abkühlen, wenn der Druck insbesondere in einem Ein-Stufen-Druckregler reduziert wird.

In der Zeichnung ist ein nachfolgend näher beschriebenes Ausführungsbeispiel der Erfindung dargestellt. Es zeigt:
- Fig. 1: ein schematisches Diagramm eines Kraftstoffzufuhrsystems,
- Fig. 2: eine perspektivische Ansicht eines Druckreglers und einer Heizeinrichtung,
- Fig. 3: eine Explosionsdarstellung des Druckreglers und der Heizeinrichtung aus Fig. 2,
- Fig. 4: eine Schnittdarstellung entlang der Linie 4 - 4 aus Fig. 2,
- Fig. 5: eine Schnittdarstellung entlang der Linie 5 - 5 aus Fig. 3,
- Fig. 6: eine aufgeschnittene Darstellung einer Abschlußkappe des Gehäuses der Heizeinrichtung,
- Fig. 7: eine vergrößerte, perspektivische Ansicht eines Innenteils der Heizeinrichtung,
- Fig. 8: eine Schnittdarstellung des Innenteils, wobei seine Finnen entfernt wurden,
- Fig. 9: eine Seitenansicht einer Finne des Innenteils und
- Fig. 10: eine Endansicht der Finne aus Fig. 9.

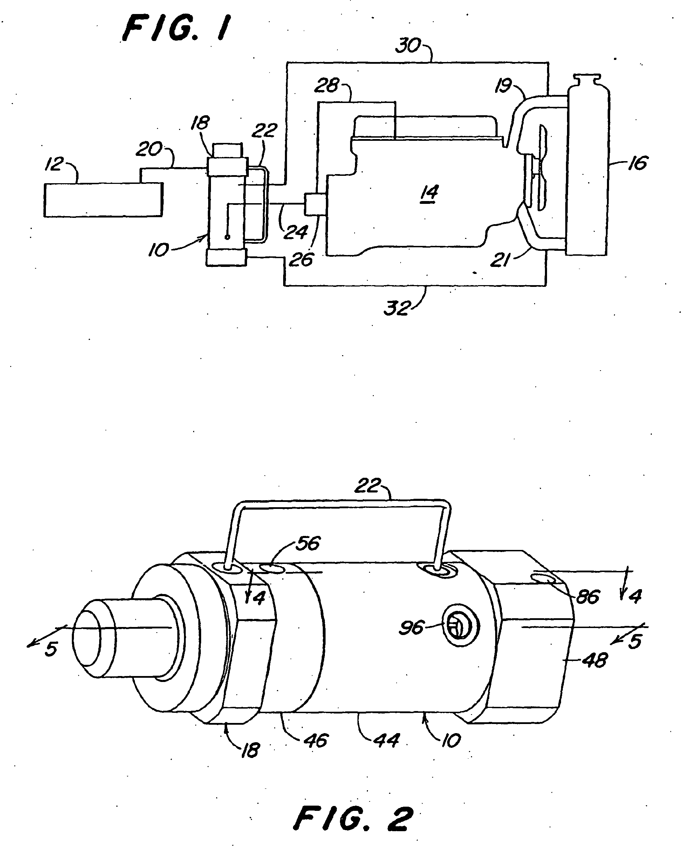

Die Heizeinrichtung 10 der vorliegenden Erfindung wird in Fig. 1 in einem Fahrzeug-Kraftstoffzufuhrsystem dargestellt. Das Kraftstoffzufuhrsystem weist zumindest einen Kraftstofftank 12, einen Druckregler 18 und die Heizeinrichtung 10 auf, um gasförmigen Kraftstoff, wie beispielsweise Erdgas, an einen Antrieb 14 zu liefern. Der Antrieb 14 weist ein Kühlsystem auf, das einen Kühler 16 umfaßt, der mit dem Antrieb 14 über Schläuche 19 und 21 in einer für einen flüssigkeitsgekühlten Antrieb üblichen Art und Weise verbunden ist. Die Heizeinrichtung 10 ist an einem Gehäuse 36 des Druckreglers 18 angebracht. Der Druckregler 18 erhält von dem Kraftstofftank 12 über eine Kraftstoffleitung 20 unter hohem Druck stehenden, gasförmigen Kraftstoff. Der Druckregler 18 reduziert den Druck des Kraftstoffs, der den Druckregler 18 verläßt. Als Ergebnis der Druckreduzierung des Kraftstoffs wird die Temperatur des Kraftstoffs reduziert. Der abgekühlte Kraftstoff gelangt durch eine äußere Leitung 22 von einem Reglerausgang zu einem Kraftstoffeingang der Heizeinrichtung 10. Nachdem er in der Heizeinrichtung 10 aufgeheizt wurde, gelangt der Kraftstoff durch eine Kraftstoffleitung 24 zu einem Dosierventil 26 an dem Antrieb 14. Eine Kraftstoffleitung 28 leitet Kraftstoff von dem Dosierventil 26 zu dem Antrieb 14. Kühlmittel von dem Kühlsystem wird an die Heizeinrichtung 10 über eine Kühlmittelleitung 30 geliefert und wird zu dem Kühlmittelsystem über eine Kühlmittelleitung 32 zurückgeführt.

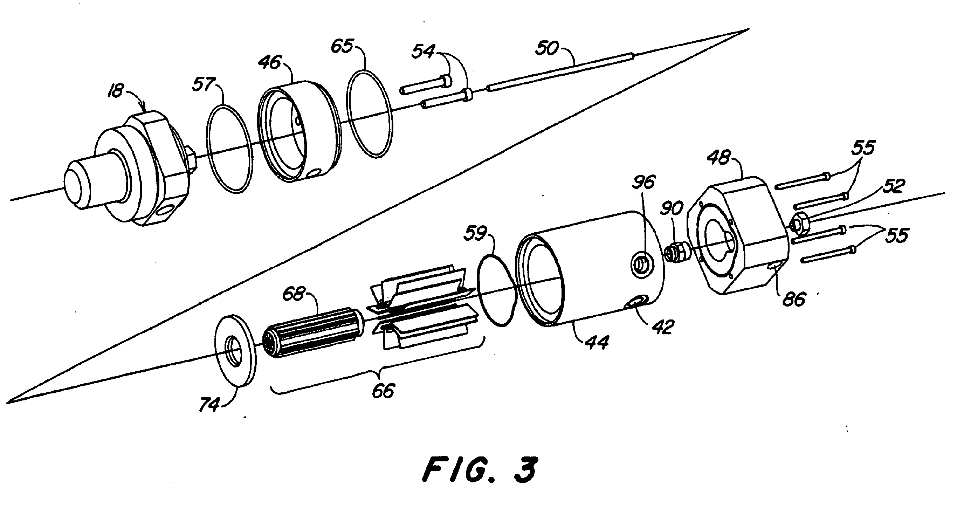

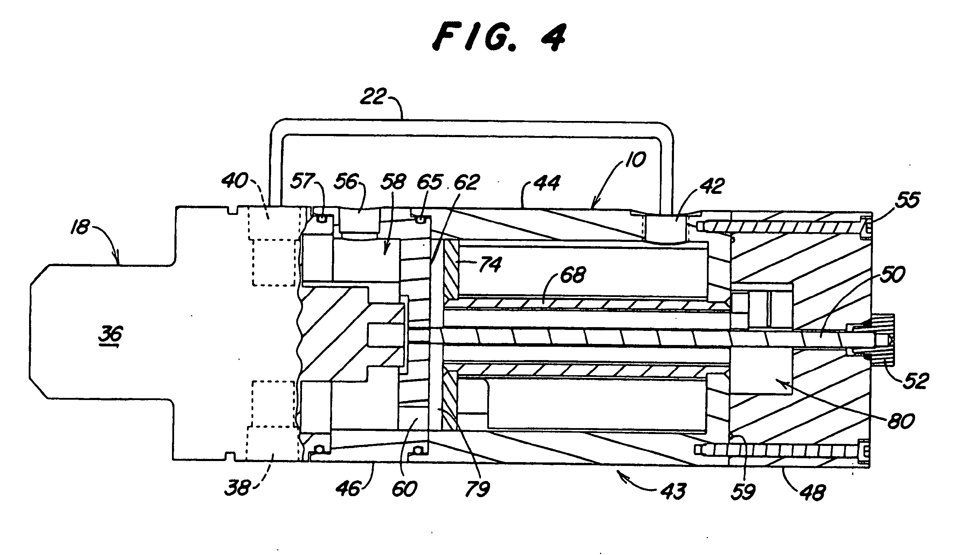

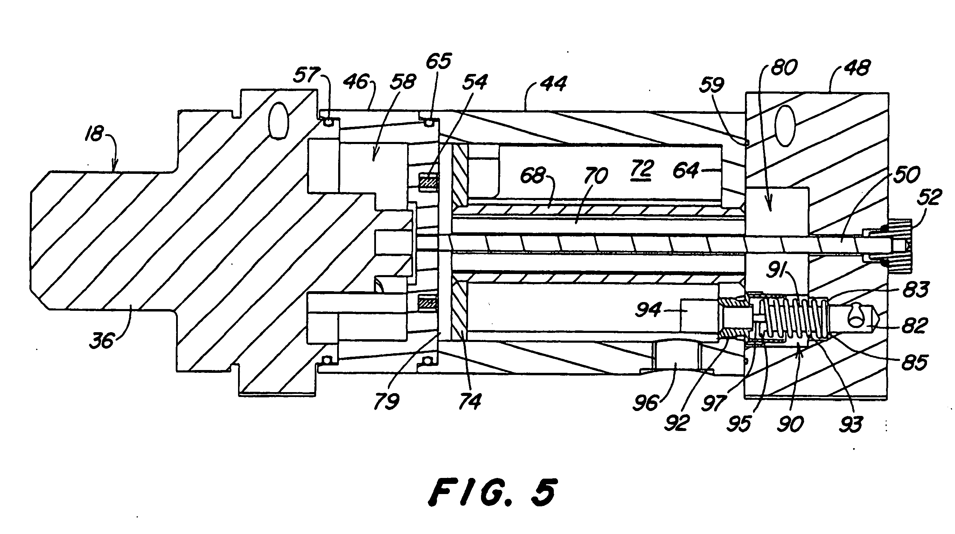

Es wird nun auf die Figuren 2 - 5 Bezug genommen, in denen die Heizeinrichtung 10 genauer dargestellt wird. Die Heizeinrichtung 10 wird als an dem Druckregler 18 angebracht dargestellt. Der Druckregler 18 weist ein Gehäuse 36 mit einem Kraftstoffeinlaß 38 und einem Kraftstoffauslaß 40 auf. Bei dem Druckregler 18 handelt es sich vorzugsweise um einen ITT Conoflow aus deren High Pressure Natural Gas Vehicle Serie von Druckreglern und ist dergestalt ausgebildet, daß der Kraftstoff vornehmlich außerhalb des Gehäuses 36 des Druckreglers 18 jenseits des Kraftstoffauslasses 40 expandiert. Als Ergebnis wird der Druckregler 18 nicht der extremen Kälte des expandierenden Kraftstoffs ausgesetzt. Die äußere Leitung 22 leitet den kalten, einen niedrigen Druck aufweisenden Kraftstoff von dem Kraftstoffauslaß 40 zu dem Kraftstoffeinlaß 42 der Heizeinrichtung 10.

Die Heizeinrichtung 10 weist ein Gehäuse 43 mit drei Hauptabschnitten, einem zylindrischen Bereich 44, einem Erweiterungsteil 46 und einer Abschlußkappe 48, auf. Der zylindrische Bereich 44, der Erweiterungsteil 46 und die Abschlußkappe 48 werden durch einen Gewindestutzen 50 zusammengehalten, der in den Erweiterungsteil 46 des Gehäuses 43 eingeschraubt ist und sich durch den zylindrischen Bereich 44 und die Abschlußkappe 46 hindurch erstreckt. Eine Mutter 52 am Ende der Heizeinrichtung 10 hält den Gewindestutzen 50 zurück. Ein Paar von Schrauben 54 sichert die Erweiterung 46 an dem Gehäuse 36 des Druckreglers 18. Ein O-Ring 57 liefert eine Dichtung zwischen dem Erweiterungsteil 44 und dem Gehäuse 36. Schrauben 55 verbinden die Abschlußkappe 48 mit dem zylindrischen Bereich 44, wobei zwischen ihnen eine O-Ring Dichtung 59 vorgesehen ist.

An dem Erweiterungsteil 46 ist ein Kühlmitteleinlaß 56 zu der Heizeinrichtung 10 vorgesehen. Der Erweiterungsteil 46 ist tassenförmig mit einer radialen Abschlußwandung 62 ausgebildet und bildet einen Hohlraum 58. Der Hohlraum 58 ist in Richtung der Heizeinrichtung 10, die dem Druckregler 18 gegenüberliegt, geöffnet. Wenn die Heizeinrichtung 10 an dem Druckregler 18 angebracht ist, schließt das Gehäuse 36 den Hohlraum 58. Der Kühlmitteleinlaß 56 führt dem Hohlraum 58 flüssiges Kühlmittel zu, wobei das Kühlmittel auf das Gehäuse 36 einwirkt, um den Druckregler 18 zu erhitzen. Der Erweiterungsteil 44 weist eine Aussparung bzw. einen Kühlmittelauslaß 60 durch die radiale Abschlußwandung 26 auf, um es Kühlmittel zu erlauben aus dem Hohlraum 58 abzufließen. Der Kühlmittelauslaß 60 ist dem Kühlmitteleinlaß 56 gegenüber positioniert, so daß Kühlmittel, das in den Hohlraum 58 eintritt, über das Gehäuse 36 des Druckreglers 18 zu dem Kühlmittelauslaß 60 fließen muß.

Der zylindrische Bereich 44 weist eine Bodenwand 64 an einem Ende auf und ist an dem gegenüberliegenden Ende, das gegen die Erweiterung 44 mittels einer O-Ring Dichtung 65 gedichtet ist, offen ausgebildet. In dem zylindrischen Bereich 44 ist ein Innenteil 66 angeordnet. Der Innenteil 66 weist eine röhrenförmige oder zylindrische Wandung 68 mit einer Mehrzahl sich nach innen erstreckender Finnen 70 und sich nach außen erstreckender Finnen 72 auf. Der Gewindestutzen 50 erstreckt sich durch den Innenteil 66 innerhalb der röhrenförmigen Wandung 68. Eine Endabdeckung 74, ähnlich einer Unterlegscheibe, ist an dem offenen Ende des zylindrischen Bereichs 44 angeordnet und sitzt auf den Endbereichen der äußeren Finnen 72 auf. Die Endabdeckung 74 erstreckt sich radial zwischen der röhrenförmigen Wandung 68 des Innenteils 66 und der inneren Oberfläche des zylindrischen Bereichs 44.

Die röhrenförmige Wandung 68 des Innenteils 66 teilt das Innere des zylindrischen Bereichs 44 in separate Kraftstoff- und Kühlmitteldurchlässe. Der Kraftstoffdurchlaß liegt radial außerhalb der röhrenförmigen Wandung 68, während der Kühlmitteldurchlaß 78 innerhalb der röhrenförmigen Wandung 68 liegt. Die Endabdeckung 74 ist von der Abschlußwandung 62 der Erweiterung 46 beabstandet, um einen Spalt 79 zur Verfügung zu stellen, um einen Kühlmittelstrom von dem Kühlmittelauslaß 60 zu dem Zentrum des Innenteils 66 zu ermöglichen, bei dem das Kühlmittel durch die röhrenförmige Wandung 68, über die Oberfläche der inneren Finnen 70 strömt. Das Kühlmittel erhitzt/erwärmt die röhrenförmige Wandung 68 und die äußeren Finnen 72.

Das Kühlmittel fließt in einen Behälter 80, der in die Abschlußkappe 48 eingeformt ist. Von dem Behälter 80 fließt das Kühlmittel durch den Sumpf 82 zu einer Querbohrung 84, die zu einem Kühlmittelauslaß 86 führt. Der Sumpf 82 bildet eine Leiste 83 und einen Sitz 85 für einen Thermostaten bzw. ein Steuermittel 90. Das Steuermittel 90 weist ein Anschlußstück 92 auf, das in die Bodenwand 64 des zylindrischen Bereichs 44 eingeschraubt ist. Das Steuermittel 90 weist einen Kolben 91 auf, welcher an dem Sitz 85 angreift, um den Sumpf 82 zu schließen, wobei der Kühlmittelstrom durch die Heizeinrichtung 10 gestoppt wird. Der Kolben 91 wird von dem Sitz 85 weg durch eine Feder 93 belastet, die an der Leiste 83 und an der Lippe 95 des Kolbens 91 angreift. Eine Stange 97 ist mit dem Kolben 91 verbunden und erstreckt sich in ein Wachsreservoir 94. Das Wachsreservoir 94 ist in dem Kraftstoffdurchlaß an den Kraftstoffauslaß 96 angrenzend angeordnet. Wenn die Kraftstofftemperatur zu hoch ansteigt, schmilzt das Wachs und vergrößert sich volumenmäßig, wodurch bewirkt wird, daß die Stange 97 und der Kolben 91 sich gegen die Wirkung der Feder 93 bewegen, bis der Kolben an den Sitz 85 angreift, um den Kühlmittelstrom zu stoppen. Wenn die Kraftstofftemperatur später sinkt, verfestigt sich das Wachs und zieht sich zusammen, wobei dem Kolben 91 erlaubt wird, sich durch die Federkraft von dem Sitz 85 wegzubewegen und eine Wiederaufnahme des Kühlmittelstroms zu erlauben. Das Wachsreservoir 94 ist in dem zylindrischen Bereich 44 in dem an den Kraftstoffauslaß 96 angrenzend angeordnet, so daß das Steuermittel auf die Kraftstofftemperatur, nicht auf die Kühlmitteltemperatur, reagiert, wenn er den Kühlmittelfluß durch die Heizeinrichtung 10 reguliert. Als Ergebnis wird der Kraftstoff auf einer konstanten oder annähernd konstanten Temperatur gehalten, während die Temperatur des Druckreglergehäuses etwas in Abhängigkeit von dem Kühlmittelfluß durch die Erweiterung 46, die notwendig ist, um die gewünschte Kraftstofftemperatur aufrechtzuerhalten, variieren wird.

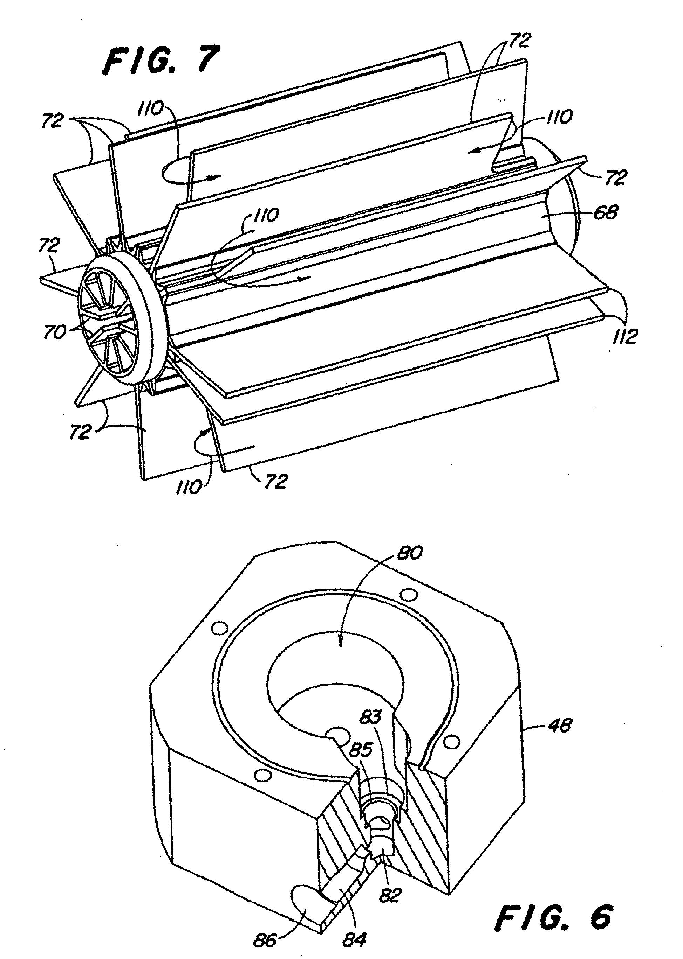

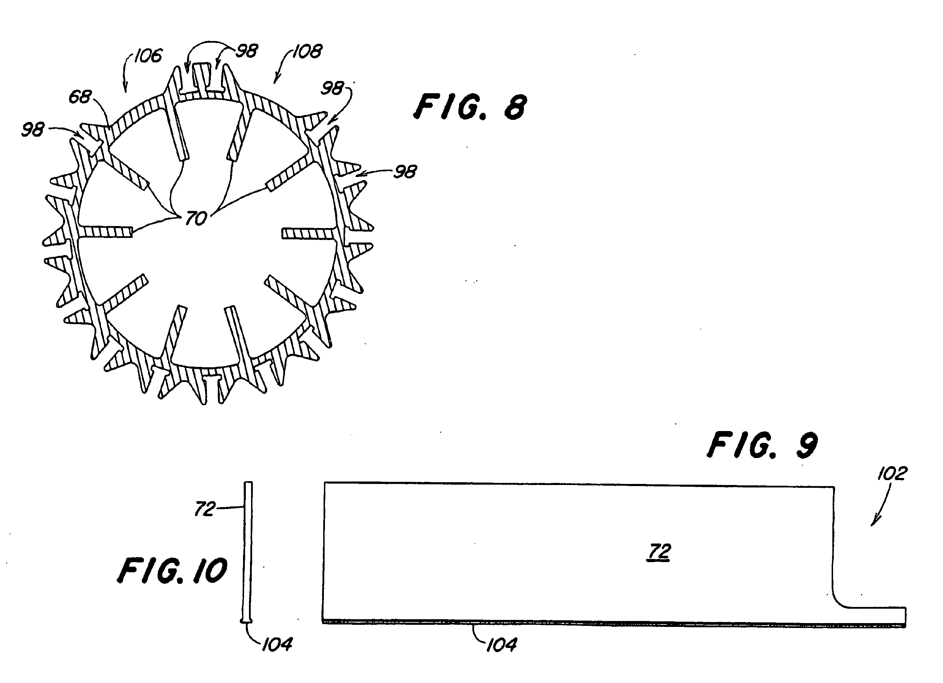

Der Innenteil 66 wird in den Figuren 7 - 10 genauer dargestellt. Der Innenteil 66 weist einen Extrusionsteil auf, der die röhrenförmige Wandung 68 und die nach innen gerichteten Finnen 70 bildet. Das Äußere der Wandung 68 ist mit einer Mehrzahl umfangsmäßig beabstandeter T-förmiger Schlitze 98 versehen. Die Schlitze 98 nehmen einzelne Finnen 82 auf. Die Finnen 72 weisen eine vergrößerte Kante 104 auf, die im Querschnitt T-förmig ist, wie dies in Fig. 10 dargestellt ist. Die Finnen 72 werden an einem Ende durch einen ausgeschnittenen Bereich 102 beschnitten. Die Finnen 92 sind an der Wand 68 dadurch angebracht, daß die T-förmige Kante 104 in Längsrichtung in die Schlitze 98 eingeschoben wird. Die Finnen 70 sind derart angeordnet, daß ausgeschnittene Bereiche 102 an abwechselnden Endbereichen des Innenteils 66 angeordnet sind, so daß ein serpentinenförmiger Pfad für den Kraftstoffstrom über die Oberfläche der Finnen 70, wie es durch die Pfeile 110 in Fig. 7 gezeigt wird, gebildet wird.

Es wird nun spezifisch auf Fig. 8 Bezug genommen, die die röhrenförmige Wandung 68 mit einem größeren Freiraum 106 angrenzend an die T-Schlitze und einem weiteren größeren Freiraum 108 zwischen angrenzenden T-Schlitzen zeigt. Zwei eng beabstandete T-Schlitze 98 trennen die die Freiräume 106 und 108. Der Freiraum 106 ist angrenzend an den Kraftstoffauslaß 96 in dem zylindrischen Bereich 44 vorgesehen, während der Freiraum 108 an den Kraftstoffeinlaß 42 angrenzend angeordnet ist. Die beiden Schlitze 98 zwischen den Freiräumen 106, 108 sind für zwei Finnen 112 voller Länge vorgesehen, die wie die Finnen 72 aber ohne ausgeschnittene Bereiche 102 ausgebildet sind. Die Finnen 12 stellen zwischen sich einen Luftraum zur Verfügung, wodurch eine Isolationsschicht zwischen dem Kraftstoffeinlaß 42 und dem Kraftstoffauslaß 96 gebildet wird, so daß der Einlaßkraftstoff nicht den Auslaßkraftstoff kühlt.

Die äußere Verbindung zwischen dem Druckreglerauslaß und dem Kraftstoffeinlaß der Heizeinrichtung 10 über die Leitung 22 befähigt den Druckregler 18 in einfacher Weise, ohne die Heizeinrichtung 10 verwendet zu werden, wenn die Anwendung eine ausreichende Kraftstoffleitungslänge zwischen dem Druckregler 18 und dem Dosierventil 26 für eine Umgebungsaufheizung des Kraftstoffs zur Verfügung stellt. Die Heizeinrichtung 10 ist nicht an dem Druckregler 18 angebracht, und die Kraftstoffleitung 24 zu dem Antrieb 14 ist direkt mit dem Kraftstoffauslaß 40 verbunden.

Während es vorgezogen wird, die Heizeinrichtung 10 an dem Druckregler 18 so anzubringen, daß der Druckregler 18 ebenfalls durch das Kühlmittel erwärmt wird, kann die Heizeinrichtung 10 statt dessen als einzeln angeordnete Heizeinrichtung verwendet werden. In diesem Fall würde kein Hohlraum 58 für Kühlmittel zur Aufheizung des Druckreglers vorhanden sein. Vielmehr würde das Kühlmittel durch einen Einlaß in das Kerngebiet der Heizeinrichtung 10 fließen, um durch die Innenseite der röhrenförmigen Wandung 68 zum Aufheizen des Innenteils 66 zu fließen. Die Heizeinrichtung 10 weist immer noch den Vorteil auf, den Kühlmitteldurchfluß als eine Funktion der Kraftstofftemperatur und nicht der Kühlmitteltemperatur zu regulieren.

Die vorliegende Erfindung soll nicht durch oben beschriebene Ausführungsform, sondern nur durch die folgenden Ansprüche begrenzt werden.

## Patentansprüche

1. Heizeinrichtung (10) für insbesondere gasförmige Kraftstoffe mit wenigstens einem Kraftstoffeinlaß (42) und einem Kraftstoffauslaß (96) sowie wenigstens einem Kühlmitteleinlaß (56) und einem Kühlmittelauslaß (60), welche durch einen Kühlmitteldurchlaß verbunden sind, mit einem Innenteil (66), der einen Kraftstoffdurchlaß bestimmt und diesen von dem Kühlmitteldurchlaß trennt, und mit einem Steuermittel (90), das in Abhängigkeit von der Temperatur des Kraftstoffs einen Kühlmittelstrom **durch** den Kühlmitteldurchlaß zuläßt bzw. unterbindet, **dadurch gekennzeichnet, daß** die Heizeinrichtung (10) ein Gehäuse (43) mit wenigstens einem zylindrischen Bereich (44) aufweist, in den der Innenteil (66) hineinragt, und **daß** der Innenteil (66) eine zylindrische Wandung (68), welche von dem zylindrischen Bereich (44) des Gehäuses (43) der Heizeinrichtung (10) beabstandet ist und den Kühlmitteldurchlaß on dem Kraftstoffdurchlaß trennt, und radial abstehende und sich axial erstreckende Finnen (70, 72) aufweist, welche den Kraftstoffdurchlaß definieren.

2. Heizeinrichtung nach Anspruch 1, **dadurch gekennzeichnet, daß** das Steuermittel (90) wenigstens teilweise in den Kraftstoffdurchlaß hineinragt.

3. Heizeinrichtung nach einem oder mehreren der vorherigen Ansprüche, **dadurch gekennzeichnet, daß** die Finnen (70, 72) an ihren axialen Enden derart abwechselnd ausgeschnittene Bereiche (102) aufweisen, daß sie einen serpentinenartigen Durchlaß bestimmen.

4. Heizeinrichtung nach einem oder mehreren der vorherigen Ansprüche, **dadurch gekennzeichnet, daß** der Kraftstoffeinlaß (42) und der Kraftstoffauslaß (96) in dem vorzugsweise zylindrischen Bereich (44) umfangsmäßig beabstandet angeordnet sind.

5. Heizeinrichtung nach Anspruch 4, **dadurch gekennzeichnet, daß** zwischen dem Kraftstoffeinlaß (42) und dem Kraftstoffauslaß (96) wenigstens zwei Finnen (112) angeordnet sind.

6. Heizeinrichtung nach einem oder mehreren der vorherigen Ansprüche, **dadurch gekennzeichnet, daß** das Steuermittel (90) ein Wachsreservoir (94) aufweist, welches wenigstens bereichsweise in den Kraftstoffdurchlaß hineinragt.

7. Heizeinrichtung nach einem oder mehreren der vorherigen Ansprüche, **gekennzeichnet durch** eine Leitung (22), die den Kraftstoffeinlaß (42) der Heizeinrichtung (10) mit einem Kraftstoffauslaß (40) eines Druckreglers (18) verbinden kann und welche außerhalb des Gehäuses (36, 43) der Heizeinrichtung (10) bzw. des Druckreglers (18) angeordnet ist.

8. Heizeinrichtung nach einem oder mehreren der vorherigen Ansprüche, derart ausgebildet, daß es direkt oder mittels eines Erweiterungsteils (46) an einem Druckregler (18) bzw. an dem Gehäuse (36) eines Druckreglers (18) angreifen kann.

9. Heizeinrichtung nach Anspruch 8, **dadurch gekennzeichnet, daß** der Kraftstoffdurchlaß bzw. der Kühlmitteldurchlaß zumindest bereichsweise durch das Gehäuse (36) des Druckreglers (18) gebildet wird.

10. Heizeinrichtung nach Anspruch 8 oder 9, **dadurch gekennzeichnet, daß** das Kühlmittel seitlich durch das Gehäuse (36) des Druckreglers (18) in die Heizeinrichtung (10) bzw. den Erweiterungsteil (46) einströmt und danach die Heizeinrichtung (10) zumindest im wesentlichen axial durchströmt.

## Claims

1. Heating device (10) for in particular gaseous fuels having at least one fuel inlet (42) and one fuel outlet (96) and also at least one coolant inlet (56) and one coolant outlet (60) which are connected by means of a coolant passage, having an inner part (66) which determines a fuel passage and separates the latter from the coolant passage, and having a control means (90) which permits or prevents a coolant flow through the coolant passage as a function of the temperature of the fuel, **characterized in that** the heating device (10) has a housing (43) with at least one cylindrical region (44) into which the inner part (66) projects, and **in that** the inner part (66) has a cylindrical wall (68), which is spaced apart from the cylindrical region (44) of the housing (43) of the heating device (10) and separates the coolant passage from the fuel passage, and radially projecting and axially extending fins (70, 72) which define the fuel passage.

2. Heating device according to Claim 1, **characterized in that** the control means (90) projects at least partially into the fuel passage.

3. Heating device according to one or more of the preceding claims, **characterized in that** the fins (70, 72) have, at their axial ends, regions (102) which are alternately cut out in such a way as to determine a serpentine-like passage.

4. Heating device according to one or more of the preceding claims, **characterized in that** the fuel inlet (42) and the fuel outlet (96) are arranged in the preferably cylindrical region (44) so as to be peripherally spaced apart.

5. Heating device according to Claim 4, **characterized in that** at least two fins (112) are arranged between the fuel inlet (42) and the fuel outlet (96).

6. Heating device according to one or more of the preceding claims, **characterized in that** the control means (90) has a wax reservoir (94) which projects into the fuel passage at least in regions.

7. Heating device according to one or more of the preceding claims, **characterized by** a line (22) which can connect the fuel inlet (42) of the heating device (10) to a fuel outlet (40) of a pressure regulator (18) and which is arranged outside the housing (36, 43) of the heating device (10) and of the pressure regulator (18).

8. Heating device according to one or more of the preceding claims, designed such that it can engage on a pressure regulator (18), or on the housing (36) of a pressure regulator (18), directly or by means of an extension part (46).

9. Heating device according to Claim 8, **characterized in that** the fuel passage or the coolant passage is formed at least in regions through the housing (36) of the pressure regulator (18).

10. Heating device according to Claim 8 or 9, **characterized in that** the coolant flows into the heating device (10) or the expansion part (46) laterally through the housing (36) of the pressure regulator (18), and thereafter flows at least substantially axially through the heating device (10).

## Revendications

1. Dispositif de chauffage (10) pour des carburants en particulier gazeux, avec au moins une admission de carburant (42) et une évacuation de carburant (96) ainsi qu'au moins une admission de réfrigérant (56) et une évacuation de réfrigérant (60) qui sont reliées par un passage de réfrigérant, avec une partie intérieure (66) qui détermine le passage du carburant et sépare celui-ci du passage du réfrigérant, et admet ou bloque un flux de réfrigérant à travers le passage du réfrigérant en fonction de la température du carburant, à l'aide d'un moyen de commande (90), **caractérisé en ce que** le dispositif de chauffage (10) comporte un carter (43) avec au moins une zone cylindrique (44) dans laquelle s'engage la partie intérieure (66), et **en ce que** la partie intérieure (66) comprend une paroi cylindrique (68) qui est espacée de la zone cylindrique (44) du carter (43) du dispositif de chauffage (10), qui sépare le passage du réfrigérant du passage du carburant et qui présente des ailettes (70,72) radialement écartées et s'étendant axialement, qui définissent le passage du carburant.

2. Dispositif de chauffage selon la revendication 1, **caractérisé en ce que** le moyen de commande (90) s'engage au moins partiellement dans le passage du carburant.

3. Dispositif de chauffage selon l'une ou plusieurs des revendications précédentes, **caractérisé en ce que** les ailettes (70, 72) présentent à leurs extrémités axiales des zones (102) découpées alternativement de telle sorte qu'elles déterminent un passage en serpentins.

4. Dispositif de chauffage selon l'une ou plusieurs des revendications précédentes, **caractérisé en ce que** l'admission de carburant (42) et l'évacuation de carburant (96) sont disposées écartées selon le pourtour dans la zone (44) de préférence cylindrique.

5. Dispositif de chauffage selon la revendication 4, **caractérisé en ce qu'**entre l'admission de carburant (42) et l'évacuation de carburant (96) sont disposées au moins deux ailettes (112).

6. Dispositif de chauffage selon l'une ou plusieurs des revendications précédentes, **caractérisé en ce que** le moyen de commande (90) comprend un réservoir de cire (94) qui s'engage au moins par secteurs dans le passage du carburant.

7. Dispositif de chauffage selon l'une ou plusieurs des revendications précédentes, **caractérisé en** une conduite (22) qui peut relier l'admission de carburant (42) du dispositif de chauffage (10) à une évacuation de carburant (40) d'un régulateur de pression (18) et qui est disposée en dehors du carter (36, 43) du dispositif de chauffage (10) ou du régulateur de pression (18).

8. Dispositif de chauffage selon l'une ou plusieurs des revendications précédentes, conçu de telle sorte qu'il peut agir sur un régulateur de pression (18) directement ou au moyen d'une pièce d'extension (46) ou sur le boîtier (36) d'un régulateur de pression (18).

9. Dispositif de chauffage selon la revendication 8, **caractérisé en ce que** le passage du carburant ou le passage du réfrigérant est formé au moins par secteurs par le boîtier (36) du régulateur de pression (18).

10. Dispositif de chauffage selon l'une quelconque des revendications 8 ou 9, **caractérisé en ce que** le réfrigérant s'écoule latéralement à travers le carter (36) du régulateur de pression (18) dans le dispositif de chauffage (10) ou dans la pièce d'extension (46) et traverse ensuite le dispositif de chauffage (10), au moins sensiblement axialement.
